# EUROPÄISCHE PATENTANMELDUNG

(11) **EP 0 728 765 A1**
(43) Veröffentlichungstag der Anmeldung: **28.08.1996**
(21) Anmeldenummer: 96102165.6
(22) Anmeldetag: 14.02.1996
(51) Int. Cl.: C08F 6/16, B01D 61/36

(54) **Verfahren zur Herstellung geruchsarmer wässriger synthetischer Polymerdispersionen**

(30) Priorität: 24.02.1995 DE 19506445
(71) Anmelder: RÖHM GMBH, D-64293 Darmstadt (DE)
(72) Erfinder: Bengtson, Gisela, Dr., D-22393 Hamburg (DE); Pingel, Holger, D-21502 Geesthacht (DE); Siegert, Hermann, Dr., D-64342 Seeheim-Jugenheim (DE); Süfke, Thomas, Dr., D-64380 Rossdorf (DE)

(57) **Zusammenfassung**

Die Erfindung betrifft ein Verfahren zur Herstellung geruchsarmer wäßriger Dispersionen von synthetisch hergestellten Polymerisaten, ausgehend von niedermolekulare flüchtige organische Substanzen enthaltenden wäßrigen Dispersionen synthetisch hergestellter Polymerisate, wobei man die wäßrigen Dispersionen dem Verfahren der Pervaporation unterwirft.

## Beschreibung

### Gebiet der Erfindung

Die Erfindung betrifft ein Verfahren zur Herstellung geruchsarmer wäßriger synthetischer Polymerdispersionen durch Pervaporation.

### Stand der Technik

Die Anwendung wäßriger Kunststoffdispersionen in der Technik hat in den beiden letzten Jahrzehnten zunehmend an Bedeutung gewonnen. Der Antrieb für die zunehmende Verbreitung in zahlreichen Anwendungsgebieten kommt nicht zuletzt aus der Oekologie: Die Lösungsmittelemission aus den alternativ eingesetzten Polymerlösungen soll aus toxikologischen und ökologischen Gründen möglichst weitgehend gesenkt werden. Zunehmend fordert der Markt auch in den als Alternative bevorzugten wäßrigen Dispersionen letzte Reste an niedermolekularen organischen Verunreinigungen (VOC) zu beseitigen. Derartige Laststoffe können z.B. aus Restmonomeren, nicht polymerisierenden Bestandteilen aus der Monomerproduktion, Initiatorzerfallsprodukten oder Hilfsstoffen wie z.B. geringen Mengen Lösungsmittel in den eingesetzten Rohstoffen bestehen. Bei der Herstellung der wäßrigen Polymerdispersionen durch radikalische Polymerisation werden Dispersionen erhalten, die neben einem gewünschten Feststoffanteil (Latex) von 30 - 60 Gew.-% einen unerwünschten Anteil an flüchtigen organischen Komponenten enthalten, der üblicherweise weniger als 1 Gew.-% beträgt und im allgemeinen 0,1 Gew.-% nicht übersteigt. Ein besonderes Problem stellen dabei die auftretenden, geruchsaktiven Substanzen, z.B. Monomere, Ester und schwefelhaltige Verbindungen dar. Die Technik hat Reinigungsmethoden für die aus den Dispersionen zu gewinnenden Polymerlatices erarbeitet (vgl. Houben-Weyl, Methoden der Organischen Chemie, 4. Aufl., Bd. E20, 269 - 276, Georg Thieme Verlag 1987). Übliche Reinigungsverfahren sind einerseits Dampfstripping bzw. andere destillative Reinigungsverfahren oder die Reinigung über Membranverfahren. Diese zuletzt genannte Art der Reinigung zielt in der Regel auf die Entfernung salzhaltiger Verunreinigungen wie Emulgatoren, Initiatoren und andere Elektrolyten bzw. auf die Aufkonzentration zu höheren Feststoffgehalten durch Entfernung des Wassers ab. Beschrieben werden u.a. die Dialyse, Dia- bzw. Ultrafiltration oder Mikrofiltration. Dabei finden in der Regel mikroporöse Membranen mit - je nach Verfahren - unterschiedlichen Porengrößen, meist im Bereich 1 nm bis 10 um Anwendung (vgl. Ullmann's Encyclopedia of Industrial Chemistry, 5th. Ed., Vol. A16, pg. 187, VCH 1990). Diesen Trennverfahren liegt als Wirkmechanismus eine Art Siebung in Abhängigkeit von der Porengröße bzw. bei der Dialyse der Stoffaustausch durch eine mikroporöse Membran entlang eines Konzentrationsgradienten unter isobaren und isothermen Bedingungen zugrunde. Eine Geruchsminderung ist bei Dispersionen gegenwärtig nur durch das erwähnte langsame oder durch Strippen beschleunigte Ausdampfen der Rohdispersionen zu erreichen.

Bei Trennproblemen einer anderen Art, nämlich der Auftrennung von verschiedenen flüssigen Stoffgemischen wird das Verfahren der Pervaporation eingesetzt [vgl. T.M. Aminabhavi et al. in J.M.S. Macromol. Chem. Phys. C34(2) 139 - 204 (1994)]. Bekannte Anwendungsgebiete sind die Trennung von Gemischen aus niedermolekularen organischen Flüssigkeiten mit nahe beieinander liegenden Siedepunkten, Alkohol-Wassermischungen, die Abtrennung von flüchtigen Verunreinigungen aus Wasser, wie z.B. chlorierte Kohlenwasserstoffe, Phenol u.ä.. Zahlreiche Druckschriften beschäftigen sich mit derartigen Trennproblemen und geeigneten apparativen Vorrichtungen.
In der FR-A 2 425 876 ist z.B. die Verwendung einer Silikongummimembran zur Abtrennung von lipophilen niedermolekularen Flüssigkeiten in Mengen von 0,01 bis 0,2 Gew.-% aus Gemischen mit Wasser mittels Pervaporation beschrieben.
Aus der JP-A 04 197 427 (Chem. Abstr. 117(24): 236573z) ist die Abtrennung organischer Lösemittel aus wäßrigen Lösungen oder Emulsionen mittel Pervaporation oder "Reverse Osmosis" bekannt.
Die DE-A 39 34 656 betrifft ein Verfahren zur Herstellung von wäßrigen Dispersionen, wobei in allgemeiner Form die Entfernung von Flüssigkeiten aus einem gegebenenfalls mehrphasigen Flüssigkeitsgemisch mittels Membrandestillation (Pervaporation oder transmembrane Destillation) beansprucht wird. Zu suspendierende Substanzen werden dabei in einem organischen Lösungsmittel gelöst und die Lösung anschließend mit Wasser vermischt oder gegebenenfalls in Wasser dispergiert.

Das verwendete organische Lösungsmittel wird über Membrandestillation entfernt. Soweit man dieser Druckschrift differenzierte Anwendungen entnehmen kann, handelt es sich um die Herstellung von wäßrigen Kolloiden, Emulsionen oder Mischmicellösungen geringen Trübstoffgehalts, denen die bei der Herstellung verwendeten Lösungsmittel bis auf einen Restanteil von 1 Gew.-%, äußersten Falls 0,1 Gew.-%, entzogen werden.

### Aufgabe und Lösung

Die vorliegende Aufgabe betrifft indessen die Herstellung inclusive Aufreinigung von wäßrigen Polymerdispersionen nach dem Verfahren der radikalischen Emulsionspolymerisation. Die Aufgabe umfaßt die Entfernung von Laststoffen aus Polymerdispersionen, insbesondere die Abtrennung niedermolekularer organischer Substanzen, wobei der Entfernung von geruchsaktiven Monomeren und Nebenprodukten in Gegenwart relativ hoher polymerer Feststoffkonzentrationen besondere Bedeutung zukommt. Es ist somit Aufgabe der vorliegenden Erfindung, ein Verfahren zu schaffen, welches die Herstellung von geruchsarmen, d.h. im Sinne der obigen Problembeschreibung laststoffarmen Polymerdispersionen ermöglicht, ohne deren charakteristische Verarbeitungs- und Anwendungseigenschaften zu verändern. Zugleich ist die Aufgabe gestellt, die Laststoffe so auszutragen, daß sie einer sachgerechten Entsorgung zugeführt werden können. Die Aufgabe wird dadurch gelöst, daß dem Verfahrensschritt der Emulsionspolymerisation eine Pervaporationsstufe nachgeschaltet wird, in der die flüchtigen organischen Laststoffe selektiv aus der jeweiligen Rohdispersion abgetrennt und in angereicherter Form einer Folgebehandlung zugeführt werden.
Die vorliegende Erfindung schließt somit unmittelbar an die bekannten Verfahren der Emulsionspolymerisation an (vgl. H. Rauch-Puntigam, Acryl- und Methacrylverbindungen, p g. 217 - 299, Springer-Verlag 1967; H.F. Mark et al. Encyclopedia of Polymer Science & Engineering, 2nd. Ed. Vol. 6, pg. 1 - 51, J. Wiley 1986; Ullmann's Encyclopedia of Industrial Chemistry 5th. Ed. Vol. A21, pg. 273 - 289 VCH 1992).
Das erfindungsgemäße Verfahren eignet sich nach bisher vorliegenden Erfahrungen zur Anwendung auf die typischen Emulsionspolymerisationsverfahren des Standes der Technik. Von besonderem Interesse ist die Beobachtung, daß auch bei Anteilen von flüchtigen organischen Substanzen unter 5 Gew.-%, beispielsweise im Bereich < 1 Gew.-% ein durchaus befriedigendes Ergebnis erzielt wird.
Die Bestandteile eines typischen EmulsionspolymerisationsSystems umfassen Wasser als kontinuierliche Phase, die Monomeren, ggf. in gelöster Form, Emulgatoren und Stabilisatoren sowie Initiatoren und ggf.
Kettenübertrager, Puffer, bisweilen Saat-Latices und Lösungsmittel. Beispiele für die praktische Anwendung des erfindungsgemäßen Verfahrens sind u.a. die Herstellung säurehaltiger Dispersionen auf Methacrylatbasis, die Herstellung selbstvernetzender Textildispersionen, thermoplastischer Lackdispersionen, oder Haftkleberdispersionen unterschiedlicher chemischphysikalischer Charakteristik. Bei den flüchtigen Nebenprodukten handelt es sich um Restmonomere sowie um niedermolekulare Nebenprodukte der radikalischen Emulsionspolymerisation. Als typische Verunreinigungen können z.B. genannt werden: Butylpropionat, Ethylpropionat, 2-Ethylhexylpropionat, Butylacrylat, Ethylacrylat, 2-Ethylhexylacrylat, Methylmethacrylat, Styrol, Methacrylsäure. Es handelt sich überwiegend um organische Ester, welche, wie Ester im allgemeinen, äußerst geruchsintensiv sind, und die in dieser Eigenschaft als Laststoffe im Hinblick auf die verschiedenen Verwendungen der Polymerdispersionen zu betrachten sind.
Der erfindungsgemäßen Anwendung der organophilen Pervaporation liegt dabei die Beobachtung zugrunde, daß organische Ester sich auch dann aus hoher wäßriger Verdünnung pervaporativ austragen und anreichern lassen, wenn sie in Lösungskontakt mit dispergierten Polymeren stehen.
Gegen die Anwendung des Pervaporationsverfahrens zur Lösung der oben dargestellten Aufgabe schien die mögliche Koagulation der Polymerdispersion durch Scherung und in der Folge ein Verstopfen der Fließkanäle der Membran zu sprechen neben der prinzipiell vorhandenen Gefahr des "Membrane Fouling".
Im folgenden wird die erfindungsmäßige Ausgestaltung der Pervaporation im Hinblick auf die Aufgabenstellung, d.h. auf die besonderen Bedingungen der Pervaporation wäßriger Polymerdispersionen vorgestellt.
Bekanntlich besteht das Prinzip der Stofftrennung durch Pervaporation darin, daß das zu trennende Flüssiggemisch im Querstrom über geeignet-selektive Polymermembranen geführt wird, wobei eine als Permeat bezeichnete Fraktion die Membran durchdringt und in Dampfform von der Rückseite der Membran abgeführt wird. Die Verdampfung des Permeats wird durch Abpumpen, d.h. durch Aufrechterhalten eines Unterdrucks an der Rückseite der Membran, seltener durch einen umlaufenden Trägergasstrom, bewirkt. Das Partialdruckgefälle zwischen dem flüssigen Zulauf und dem dampfförmigen Permeat stellt die treibende Kraft für den Stofftransport durch die Membran dar.
Der besondere Vorteil der Pervaporation durch Membranen gegenüber konventionellen, insbesondere thermischen Verfahren der Flüssiggemischtrennung ist, daß der Trenneffekt durch gezielte Wahl des Membranmaterials und der Betriebsbedingungen in gewünschter Weise beeinflußbar ist. Insbesondere gelingt es, bei Verwendung spezieller Elastomermembranen aus wäßrig-organischen Gemischen die organische Komponente gegenüber dem Wasser relativ anzureichern, selbst dann, wenn diese eine höhere Siedetemperatur aufweist als das Wasser. Der Mechanismus dieser Vorzugsselektivität besteht in einer bevorzugten Sorption der organischen Komponente durch das Polymermaterial der Membran, dessen Funktion hier derjenigen eines Extraktionsmittels analog ist. Der wichtigste Betriebsparameter dieser als organophile Pervaporation bezeichneten Verfahrensvariante ist der permeatseitige Unterdruck: Je niedriger der Permeatdruck ist, desto höher ist die Permeationsrate der organischen Gemischkomponente relativ zu derjenigen des begleitenden Wassers. Dieser den Trenneffekt begünstigende Einfluß des Permeatdruckes ist tendenziell umso stärker ausgeprägt, je höher die Siedetemperatur der organischen Komponente liegt.

Als Trennmembranen für die organophile Pervaporation seien die folgenden genannt:
- Graftcopolymermembranen auf Silikonbasis. Der Vorteil dieser Membranen ist die hohe erzielbare Flußleistung bei zugleich relativ hoher Wasserabweisung. Als Kompositmembran auf einem mikroporösen Träger ist dieser Membrantyp besonders für solche Anwendungen geeignet, deren Trennverhalten nicht in erster Linie vom Permeatdruck bestimmt sind, d.h. für die Pervaporation niedrig- bis mittelsiedender organischer Stoffe aus Wasser.
- Blockcopolymermembranen auf Polyether-Polyamidbasis. Diese in Form homogener Filme eingesetzten Membranen haben den Vorteil, daß sie über die Membrandicke beeinflußbare Trennleistungen aufweisen und einen unbehinderten Abtransport des Permeatdampfes von der Membranrückseite gewährleisten. Derartige Membranen sind besonders geeignet für die Pervaporation hochsiedender organischer Stoffe aus Wasser.

Die pervaporative Behandlung wäßriger Polymerdispersionen mit dem Ziel der Entfernung der flüchtigen organischen Laststoffe in einer die nachfolgende Entsorgung begünstigenden Form weist eine Reihe von Besonderheiten auf, welche die apparative Gestaltung und die betriebliche Handhabung des Verfahrens bestimmen, wie im folgenden dargestellt.
(a) Die Rohdispersionen sind bezüglich der Menge der auszutragenden organischen Laststoffe hochverdünnt; ihr Gesamtanteil beträgt in der Regel weniger als 0,1 % (1000 ppm). Zuglich weisen die in Betracht kommenden Laststoffe, vor allem also die genannten Ester, eine begrenzte Wasserlöslichkeit auf. Wird der bei der Pervaporation derartiger Lösungen entstehende Permeatdampf kondensiert, d.h. durch Kälteeinwirkung rückverflüssigt, so führt die verfahrensmäßige Anreicherung der organischen Komponenten zu einer Entmischung des flüssigen Permeats in eine organische und eine wäßrige Phase. Durch fraktionierte Permeatkondensation bei verschiedenen Temperaturen (z.B. 0 Grad C für das Wasser; -40 Grad C für die organischen Komponenten) läßt sich das Permeat in einem Verfahrensschritt beispielsweise aufteilen in geringbelastetes Wasser (Kondensation bei 0 Grad C) und eine die Gesamtheit der Verunreinigungen enthaltende organische Fraktion. Die wäßrige Fraktion kann zur Ergänzung des mit der Pervaporation einhergehenden Wasserverlustes wiederverwendet werden. Die Entsorgung der gesammelten organischen Fraktion geschieht nach den für organische Lösemittelgemische geltenden Regeln. Alternativen zu dieser Verfahrensweise, bei welchen auf die Rückverflüssigung des Permeatdampfes ganz oder teilweise verzichtet wird, sind die folgenden. Bei einer möglichen Verfahrensweise wird dem Permeatdampf durch eine Kondensationsstufe von beispielsweise 0 Grad C die Hauptmenge des Wassers entzogen, während die organische Fraktion in Dampfform abgepumpt und direkt einer Verbrennung zugeführt wird. Bei einer weiteren Verfahrensweise wird auf die Rückverflüssigung des Permeates gänzlich verzichtet, indem das gesamte Permeat dampfförmig abgepumpt und einer Verbrennung zugeführt wird. Bei einer noch anderen Verfahrensweise wird der Permeatdampf mit Hilfe eines gegebenenfalls erwärmten Luftstromes von der Membranrückseite entfernt und als Permeat-Luftgemisch der Verbrennung zugeführt. Während die mit Vakuumpumpen arbeitenden Verfahrensvarianten keine speziellen Ansprüche an die Apparateform stellen, erfordert diese Verfahrensweise eine Apparateform mit permeatseitig frei zugänglich installierten Membranen, wie sie beispielsweise in der Schlauch- oder Rohrkonfiguration vorliegt.
(b) Für die niedermolekularen organischen Stoffe in wäßrigen Polymerdispersionen besteht unter den Bedingungen der organophilen Pervaporation eine Konkurrenzsituation hinsichtlich der sorptiven Verteilung zwischen dem dispergierten Polymer einerseits und dem Membranpolymer andererseits. Es hat sich gezeigt, daß trotz dieses im Prinzip erschwerenden Umstandes eine weitgehende Abreicherung der organischen Schadstoffe erreicht wird. Es muß angenommen werden, daß während der Pervaporation eine Wanderung der zu entfernenden Stoffe aus dem Einflußbereich des dispergierten Polymers hin zur Membran stattfindet, aufrechterhalten dadurch, daß die von der Membran durch selektive Sorption aufgenommenen Stoffe fortwährend als Permeat abgezogen werden. Unterstützt wird dieser Austauschvorgang durch eine die Scherstabilität der jeweiligen Polymerdispersion berücksichtigende Fördergeschwindigkeit der Rohdispersion über die Membran bzw. durch den Membranapparat.
(c) Bei Feststoffgehalten zwischen 30 und 60 % weisen die Polymerdispersionen dynamische Viskositäten im Bereich 10 bis 5000 mPa/sec auf, abhängig wie üblich von der Temperatur. Überdies neigen wäßrige Polymerdispersionen bestimmungsgemäß zur Ausbildung von Polymerfilmen mit geringem Restwassergehalt. Unter den Bedingungen der Pervaporation wird den Polymerdispersionen gemeinsam mit den auszutragenden Laststoffen auch Wasser entzogen und damit tendenziell einer Filmbildung an der Oberfläche der Membranen Vorschub geleistet. Erfindungsgemäß wird diesen für die Pervaporation wäßriger Polymerdispersionen typischen stofflichen Umständen dadurch Rechnung getragen, daß ein offenkanaliger Apparatetyp mit gleichförmiger und zugleich ausreichend hoher Querstromgeschwindigkeit der Rohdispersion über die Membranen zum Einsatz kommt. Der Förderstrom der Rohdispersion muß dabei so beschaffen sein, daß er weder stagnierende Zonen (Totzonen) aufweist, noch die Dispersionen scharfkantigen Umlenkungen, welche deren Scherstabilität beanspruchen, aussetzt. Diesen Bedingungen genügen die herkömmlichen Apparateformen der Membrantechnik, d.h. Spiralwickelmodulen oder Hohlfasermodulen, nicht. Als geeignet hat sich hingegen eine Apparateform erwiesen, wie sie beispielsweise für die Ultrafiltration von Molken verwendet wird, und die durch eine strömungsgeometrisch optimierte Zwangsführung für das flüssige Rohgemisch innerhalb einer alternierenden Anordnung von evakuierbaren Membrantaschen, durch welche der Permeatdampf abgeführt wird, gekennzeichnet ist. Eine solche Anordnung, wie sie im Prinzip in DE-A 35 07 908 beschrieben ist, bestückt mit Membrantaschen der oben erwähnten Art, kann so betrieben werden, daß der Betriebszustand den Erfordernissen der Pervaporation von Polymerdispersionen genügt. Entscheidend für die erfindungsgemäße Verwendbarkeit dieses Apparatetyps ist eine ausreichend hohe, der jeweiligen Viskosität und Temperatur empirisch angepaßte Querstromgeschwindigkeit der Rohdispersion, eingestellt und aufrechterhalten mit Hilfe rotierender Verdrängerpumpen, sogenannter Mohno-Pumpen.

Eine weitere Apparateform, welche eine einheitliche Zwangsführung der Polymerdispersion über die Membranoberfläche gewährleistet, ist der Rohrmodul nach dem Konzeptvorbild eines Rohrbündelwärmetauschers. Die starren oder flexiblen Rohre haben die Funktion von Schlauchmembranen, die im Inneren von der zu pervaporierenden Rohdispersion durchströmt werden, während der Außenraum evakuiert oder von Luft durchströmt ist.

Im folgenden wird beispielhaft die Leistungsfähigkeit der organophilen Pervaporation in der erfindungsgemäßen Anwendung auf wäßrige Polymerdispersionen an Hand der Ergebnisse eines Testlaufes veranschaulicht. Zum Einsatz kamen 38 kg einer Originaldispersion (Dispersion Plextol® BV 411, Produkt der Röhm GmbH) mit 41,4 % Feststoffgehalt, die mit drei typischen organischen Laststoffen in den angegebenen Mengen dotiert war: Ethylpropionat (EP, 247 ppm); Methylisobutyrat (MIB, 183 ppm); n-Butylpropionat (NBP, 234 ppm). Modifizierte Silikonmembranen, konfektioniert zu 10 evakuierbaren Taschen mit einer Gesamtmembranfläche von 1,15 m² kamen zum Einsatz. Der Permeatdampf wurde in zwei Fraktionen bei -10 Grad C (Hauptkondensator) und bei -196 Grad C (Flüssigstickstoff) aufgefangen. Bei einer Betriebstemperatur von 50 Grad C und einem Förderstrom von 700 l/Stunde Rohdispersion wurden nach einer Betriebsdauer von 6 Stunden die in der folgenden Tabelle mitgeteilten Ergebnisse beobachtet. Da der Wasserverlust bei diesem Testlauf nicht ergänzt wurde, etwa durch Rückführung der wäßrigen Permeatfraktion, stieg der Feststoffgehalt der Dispersion wie angegeben auf 44,5 %.

**Tabelle**

| Analysenergebnisse | | | | |
|---|---|---|---|---|
| Probe | Trockengehalt | Konzentrationen in ppm | | |
| | | EP | MIB | NBP |
| Rohdispersion | 41,4 | 240 | 183 | 234 |
| Produkt | 44,5 | 88 | 22 | 92 |
| Permeat 1 (-10 Grad C) | 0,0 | 59 | 23 | 49 |
| Permeat 2 (-196 Grad C) | 0,0 | 61000 | 55000 | 60000 |

### Diskussion der Ergebnisse

Die gute Trennleistung des Pervaporationsverfahrens bei der Reinigung synthetischer Polymerdispersionen ist überraschend, da die aktuelle Gleichgewichtskonzentration der untersuchten Verunreinigung in der Wasserphase sehr gering ist. Die Modelldispersionen waren mit insgesamt 664 ppm nur sehr gering verunreinigt und das Verteilungsgleichgewicht zwischen Wasserphase zu Polymerisatphase von (geschätzt) ca. 1/100 ergibt eine sehr niedrige lokale Konzentration von unter 10 ppm in der Wasserphase, über die der Transport zur Membranoberfläche erfolgt.
Die bei vorausgehenden Überlegungen als kritisch beurteilten Punkte des "Membrane Fouling" und die Koagulation der Dispersion durch Scherung wurden nicht bzw. nur in unbedeutendem Maßstab beobachtet. Die anwendungstechnische Beurteilung der behandelten Dispersionen zeigte keine Verschlechterung gegenüber der nicht-behandelten Dispersion an.

### Vorteilhafte Wirkungen

Gegenüber dem bisher praktizierten Verfahren der destillativen Reinigung von Dispersionen, bei der, um ein geruchsarmes Produkt zu erhalten, als Faustregel die Wasserphase in der Regel einmal ausgetauscht wird, bietet das erfindungsgemäße Verfahren der Pervaporation oekonomische Vorteile durch geringere Energiekosten und geringere Entsorgungskosten, da vergleichsweise kleinere Mengen Permeat mit einer höheren Verunreinigungskonzentration anfallen. Darüber hinaus wird wegen der geringeren thermischen Belastung die Koagulatbildung und die Zerstörung reaktiver Gruppen in der Dispersion vermindert.

## Patentansprüche

1. Verfahren zur Herstellung geruchsarmer wäßriger Dispersionen von synthetisch hergestellten Polymerisaten, ausgehend von niedermolekulare flüchtige organische Substanzen enthaltenden wäßrigen Dispersionen synthetisch hergestellter Polymerisate,
dadurch gekennzeichnet,
daß man die wäßrigen Dispersionen dem Verfahren der Pervaporation unterwirft.

2. Verfahren gemäß Anspruch 1, dadurch gekennzeichnet, daß die niedermolekulare flüchtige organische Bestandteile enthaltenden wäßrigen Dispersionen durch radikalische Emulsionspolymerisation der Monomeren in wäßrigem Medium unter Katalyse durch Radikalinitiatoren erhalten werden.

3. Verfahren gemäß den Ansprüchen 1 und 2, dadurch gekennzeichnet, daß der Gehalt an niedermolekularen flüchtigen organischen Substanzen vor Anwendung der Pervaporation bis < 5 Gew.-% bezogen auf die Polymerdispersion beträgt.

4. Verfahren gemäß Anspruch 3, dadurch gekennzeichnet, daß der Gehalt an niedermolekulargen flüchtigen organischen Substanzen vor Anwendung der Pervaporation weniger als 1 Gew.-% bezogen auf die Polymerdispersion beträgt.
